# EUROPEAN PATENT APPLICATION

(11) **EP 4 797 735 A1**
(43) Date of publication of application: **26.08.2026**
(21) Application number: 24910184.1
(22) Date of filing: 18.10.2024
(51) Int. Cl.: H04W 4/02

(54) **COMMUNICATION METHOD AND APPARATUS**

(30) Priority: 25.12.2023 CN 202311811479
(71) Applicant: HUAWEI TECHNOLOGIES CO., LTD., Shenzhen 518129 (CN)
(72) Inventor: HE, Hongli, Shenzhen, Guangdong 518129 (CN); LI, Xueru, Shenzhen, Guangdong 518129 (CN)
(74) Representative: Isarpatent
(86) International application number: PCT/CN2024/125776
(87) International publication number: WO 2025/139242

(57) **Abstract**

Embodiments of this application, relating to the field of communication technologies, disclose a communication method and an apparatus, to improve angle measurement accuracy. The method includes: receiving a first reference signal from a first device; and sending a first measurement result to a second device. The first measurement result is a measurement result of the first reference signal, the first measurement result includes information about a first AoA, the first AoA is an angle of a first path relative to a target coordinate system, the first path is a transmission path between the first device and a third device, a z-axis of the target coordinate system is the same as a z-axis of a GCS, a direction of an x-axis or a y-axis of the target coordinate system is the same as that of a projection of a first LoS path on an xy plane of the target coordinate system, the first LoS path is a LoS path between the first device and the third device, and the third device is a receive end of the first reference signal.

## Description

This application claims priority to Chinese Patent Application No. 202311811479.2, filed with the China National Intellectual Property Administration on December 25, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and an apparatus.

### BACKGROUND

With advancement of science and technology, wireless sensing technologies are gradually popularized. In wireless sensing, a sending device may radiate electromagnetic waves and send specific signals to ambient environment, and a receiving device may correspondingly receive electromagnetic waves and signals reflected by the environment. The receiving and sending devices may compare and analyze correlation between the received signals and the sent signals, and then derive related information of the ambient environment.

In wireless sensing, angle measurement and estimation about a target are important. A specific position of the target can be determined by measuring both an angle and a distance of the target on a single device side; or a specific position of the target can be determined by measuring an angle on a plurality of device sides.

Therefore, how to improve angle measurement accuracy is one of the problems to be urgently resolved by a person skilled in the art.

### SUMMARY

Embodiments of this application provide a communication method and an apparatus, to improve angle measurement accuracy. To achieve the foregoing objective, the following technical solutions are used in embodiments of this application.

According to a first aspect, an embodiment of this application provides a communication (sensing or positioning) method. The method includes: receiving a first reference signal from a first device; and sending a first measurement result to a second device. The first measurement result is a measurement result of the first reference signal, the first measurement result includes information about a first angle of arrival (angle of arrival, AoA), the first AoA is an angle of a first path relative to a target coordinate system, the first path is a transmission path between the first device and a third device, a z-axis of the target coordinate system is the same as a z-axis of a global coordinate system (global coordinate system, GCS), a direction of an x-axis or a y-axis of the target coordinate system is the same as that of a projection of a first line of sight (Line of sight, LoS) path on an xy plane of the target coordinate system, the first LoS path is a LoS path between the first device and the third device, and the third device is a receive end of the first reference signal.

In a related technology, in an angle measurement process, a sending device and a receiving device need to construct a local coordinate system (local coordinate system, LCS), and then convert the LCS into the GCS. An additional angle measurement error is introduced in a process of converting the LCS into the GCS. However, according to the method provided in embodiments of this application, one common local coordinate system is determined by using a LoS path between two devices, to avoid an additional angle measurement error caused by coordinate system conversion, thereby improving angle measurement accuracy.

Optionally, the information about the first AoA includes a first azimuth angle of arrival (Azimuth angle of arrival, AAoA) and/or a first zenith angle of arrival (zenith angle of arrival, ZAoA). The first AAoA is an angle of a projection of the first path on the xy plane of the target coordinate system relative to the x-axis of the target coordinate system, and the first ZAoA is an angle of the first path relative to the z-axis of the target coordinate system.

In a possible implementation, reporting the AoA based on the target coordinate system may be replaced with reporting an included angle between the first path and the first LoS path and a ZAoA of the first path in the GCS. Effects of the two implementations are equivalent.

In a possible implementation, first configuration information from a fourth device may be received, where the first configuration information includes first indication information, and the first indication information indicates to send the information about the first AoA based on the target coordinate system.

It can be learned that, according to the method provided in this embodiment of this application, the first configuration information may be received to determine to send the information about the first AoA by using the target coordinate system as a reference, so that the sending device and the receiving device determine one common local coordinate system by using the LoS path between the two devices, to avoid the additional angle measurement error caused by the coordinate system conversion, thereby improving the angle measurement accuracy.

In a possible implementation, first configuration information may be received from a fourth device, where the first configuration information includes configuration information of the first LoS path, and the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

It can be learned that, according to the method provided in this embodiment of this application, the LoS path between the sending device and the receiving device may be determined based on the configuration information of the first LoS path, so that one common local coordinate system is determined by using the LoS path between the two devices.

In a possible implementation, the first configuration information may further include direction information of the first LoS path, the direction information indicates that a direction of the first LoS path is a first direction or a second direction, the first direction is a direction of a LoS path from the first device to the third device, and the second direction is a direction of a LoS path from the third device to the first device.

It can be learned that, according to the method provided in this embodiment of this application, the LoS path between the sending device and the receiving device may be determined based on information like the direction information of the first LoS path, so that one common local coordinate system is determined by using the LoS path between the two devices.

In a possible implementation, a second reference signal from the first device may be received. A second measurement result is sent to the first device, the second device, or the fourth device, where the second measurement result is a measurement result of the second reference signal, the second measurement result includes at least one of at least one first channel coefficient, at least one first delay power spectrum, at least one first precoding matrix indicator (precoding matrix indicator, PMI), or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

It can be learned that, according to the method provided in this embodiment of this application, the first device, the second device, or the fourth device may determine the direction of the LoS path between the third device and the first device based on the measurement result of the second reference signal, to determine to send the configuration information of the first LoS path to the third device, so that the third device determines the accurate direction of the LoS path.

In a possible implementation, the configuration information of the first LoS path may be sent to the first device, the second device, or the fourth device.

It can be learned that, according to the method provided in this embodiment of this application, the configuration information of the first LoS path may be sent to another device, so that the another device determines the LoS path between the sending device and the receiving device based on the configuration information of the first LoS path.

In a possible implementation, a third reference signal may be sent to the first device; and a third measurement result from the first device is received, where the third measurement result is a measurement result of the third reference signal, the third measurement result includes at least one of at least one second channel coefficient, at least one second delay power spectrum, at least one second PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

It can be learned that, according to the method provided in this embodiment of this application, the direction of the LoS path between the first device and the third device may be determined based on the third reference signal, to determine to send the configuration information of the first LoS path to the first device, the second device, or the fourth device.

In a possible implementation, first information may be sent to the first device, the second device, or the fourth device, where the first information includes at least one of first accelerometer information, first magnetometer information, or a first angle error, the first accelerometer information indicates whether the third device has an accelerometer and/or indicates accelerometer accuracy of the third device, the first magnetometer information indicates whether the third device has a magnetometer and/or indicates magnetometer accuracy of the third device, and the first angle error indicates an angle error between a GCS estimated by the third device and an actual GCS.

In a possible implementation, second information from the first device may be received, where the second information includes at least one of second accelerometer information, second magnetometer information, or a second angle error, the second accelerometer information indicates whether the first device has an accelerometer and/or indicates accelerometer accuracy of the first device, the second magnetometer information indicates whether the first device has a magnetometer and/or indicates magnetometer accuracy of the first device, and the second angle error indicates an angle error between a GCS estimated by the first device and the actual GCS.

It can be learned that, according to the method provided in this embodiment of this application, transmission of the first information may be performed, so that another device determines sensor accuracy of the third device or GCS estimation accuracy. When the GCS estimation accuracy is insufficient, for example, azimuth accuracy of the GCS is insufficient, the method based on this embodiment of this application may be used, that is, angle information is reported based on the target coordinate system.

According to a second aspect, an embodiment of this application provides a communication (sensing or positioning) method. The method includes: sending first configuration information to a third device, where the first configuration information includes first indication information, and the first indication information indicates the third device to receive a first reference signal from a first device and report a measurement result; and receiving a first measurement result from the third device, where the first measurement result is a measurement result of the first reference signal, the first measurement result includes information about a first AoA, the first AoA is an angle of a first path relative to a target coordinate system, the first path is a transmission path between the first device and the third device, a z-axis of the target coordinate system is the same as a z-axis of a global coordinate system GCS, a direction of an x-axis or a y-axis of the target coordinate system is the same as that of a projection of a first LoS path on an xy plane of the target coordinate system, and the first LoS path is a LoS path between the first device and the third device.

Optionally, the information about the first AoA includes a first AAoA and/or a first ZAoA, the first AAoA is an angle of a projection of the first path on the xy plane of the target coordinate system relative to the x-axis of the target coordinate system, and the first ZAoA is an angle of the first path relative to the z-axis of the target coordinate system.

In a possible implementation, the first indication information further indicates the third device to send the information about the first AoA based on the target coordinate system.

In a possible implementation, the first configuration information includes configuration information of the first LoS path, and the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

In a possible implementation, the first configuration information further includes direction information of the first LoS path, the direction information indicates that a direction of the first LoS path is a first direction or a second direction, the first direction is a direction of a LoS path from the first device to the third device, and the second direction is a direction of a LoS path from the third device to the first device.

In a possible implementation, the first reference signal may be further sent to the third device.

In a possible implementation, a second reference signal may be further sent to the third device. A second measurement result from the third device is received, where the second measurement result is a measurement result of the second reference signal, the second measurement result includes at least one of at least one first channel coefficient, at least one first delay power spectrum, at least one first PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, configuration information of the first LoS path sent by the third device may be received, where the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

In a possible implementation, a third reference signal from the third device may be further received. A third measurement result is sent to the third device, where the third measurement result is a measurement result of the third reference signal, the third measurement result is a measurement result of the third reference signal, the third measurement result includes at least one of at least one second channel coefficient, at least one second delay power spectrum, at least one second PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, first information from the third device may be further received, where the first information includes at least one of first accelerometer information, first magnetometer information, or a first angle error, the first accelerometer information indicates whether the third device has an accelerometer and/or indicates accelerometer accuracy of the third device, the first magnetometer information indicates whether the third device has a magnetometer and/or indicates magnetometer accuracy of the third device, and the first angle error indicates an angle error between a GCS estimated by the third device and an actual GCS.

In a possible implementation, second information may be further sent to a second device, the third device, or a fourth device, where the second information includes at least one of second accelerometer information, second magnetometer information, or a second angle error, the second accelerometer information indicates whether the first device has an accelerometer and/or indicates accelerometer accuracy of the first device, the second magnetometer information indicates whether the first device has a magnetometer and/or indicates magnetometer accuracy of the first device, and the second angle error indicates an angle error between a GCS estimated by the first device and the actual GCS.

According to a third aspect, an embodiment of this application provides a communication (sensing or positioning) apparatus. The apparatus includes a receiving unit and a sending unit. The receiving unit is configured to receive a first reference signal from a first device. The sending unit is configured to send a first measurement result to a second device, where the first measurement result is a measurement result of the first reference signal, the first measurement result is a measurement result of the first reference signal, the first measurement result includes information about a first AoA, the first AoA is an angle of a first path relative to a target coordinate system, the first path is a transmission path between the first device and a third device, a z-axis of the target coordinate system is the same as a z-axis of a GCS, a direction of an x-axis or a y-axis of the target coordinate system is the same as that of a projection of a first LoS path on an xy plane of the target coordinate system, the first LoS path is a LoS path between the first device and the third device, and the third device is a receive end of the first reference signal.

Optionally, the information about the first AoA includes a first AAoA and/or a first ZAoA, the first AAoA is an angle of a projection of the first path on the xy plane of the target coordinate system relative to the x-axis of the target coordinate system, and the first ZAoA is an angle of the first path relative to the z-axis of the target coordinate system.

In a possible implementation, the receiving unit is further configured to receive first configuration information from a fourth device, where the first configuration information includes first indication information, and the first indication information indicates to send the information about the first AoA based on the target coordinate system.

In a possible implementation, the receiving unit is further configured to receive first configuration information from a fourth device, where the first configuration information includes configuration information of the first LoS path, and the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

In a possible implementation, the first configuration information further includes direction information of the first LoS path, the direction information indicates that a direction of the first LoS path is a first direction or a second direction, the first direction is a direction of a LoS path from the first device to the third device, and the second direction is a direction of a LoS path from the third device to the first device.

In a possible implementation, the receiving unit is further configured to receive a second reference signal from the first device.

In a possible implementation, the sending unit is further configured to send a second measurement result to the first device, the second device, or the fourth device, where the second measurement result includes at least one of at least one first channel coefficient, at least one first delay power spectrum, at least one first PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, the sending unit is further configured to send configuration information of the first LoS path to the first device, the second device, or the fourth device, where the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

In a possible implementation, the sending unit is further configured to send a third reference signal to the first device.

In a possible implementation, the receiving unit is further configured to receive a third measurement result from the first device, where the third measurement result is a measurement result of the third reference signal, the third measurement result is a measurement result of the third reference signal, the third measurement result includes at least one of at least one second channel coefficient, at least one second delay power spectrum, at least one second PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, the sending unit is further configured to send first information to the first device, the second device, or the fourth device, where the first information includes at least one of first accelerometer information, first magnetometer information, or a first angle error, the first accelerometer information indicates whether the third device has an accelerometer and/or indicates accelerometer accuracy of the third device, the first magnetometer information indicates whether the third device has a magnetometer and/or indicates magnetometer accuracy of the third device, and the first angle error indicates an angle error between a GCS estimated by the third device and an actual GCS.

In a possible implementation, the receiving unit is further configured to receive second information from the first device, where the second information includes at least one of second accelerometer information, second magnetometer information, or a second angle error, the second accelerometer information indicates whether the first device has an accelerometer and/or indicates accelerometer accuracy of the first device, the second magnetometer information indicates whether the first device has a magnetometer and/or indicates magnetometer accuracy of the first device, and the second angle error indicates an angle error between a GCS estimated by the first device and the actual GCS.

According to a fourth aspect, an embodiment of this application provides a communication (sensing or positioning) apparatus. The apparatus includes a sending unit and a receiving unit. The sending unit is configured to send first configuration information to a third device, where the first configuration information includes first indication information, and the first indication information indicates the third device to receive a first reference signal from a first device and report a measurement result. The receiving unit is configured to receive a first measurement result from the third device, where the first measurement result is a measurement result of the first reference signal, the first measurement result includes information about a first AoA, the first AoA is an angle of a first path relative to a target coordinate system, the first path is a transmission path between the first device and the third device, a z-axis of the target coordinate system is the same as a z-axis of a global coordinate system GCS, a direction of an x-axis or a y-axis of the target coordinate system is the same as that of a projection of a first LoS path on an xy plane of the target coordinate system, and the first LoS path is a LoS path between the first device and the third device.

Optionally, the information about the first AoA includes a first AAoA and/or a first ZAoA, the first AAoA is an angle of a projection of the first path on the xy plane of the target coordinate system relative to the x-axis of the target coordinate system, and the first ZAoA is an angle of the first path relative to the z-axis of the target coordinate system.

In a possible implementation, the first indication information further indicates the third device to send the information about the first AoA based on the target coordinate system.

In a possible implementation, the first configuration information includes configuration information of the first LoS path, and the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

In a possible implementation, the first configuration information further includes direction information of the first LoS path, the direction information indicates that a direction of the first LoS path is a first direction or a second direction, the first direction is a direction of a LoS path from the first device to the third device, and the second direction is a direction of a LoS path from the third device to the first device.

In a possible implementation, the sending unit is further configured to send the first reference signal to the third device.

In a possible implementation, the sending unit is further configured to send a second reference signal to the third device.

In a possible implementation, the receiving unit is further configured to receive a second measurement result from the third device, where the second measurement result is a measurement result of the second reference signal, the second measurement result includes at least one of at least one first channel coefficient, at least one first delay power spectrum, at least one first PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, the receiving unit is further configured to receive configuration information of the first LoS path sent by the third device, where the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

In a possible implementation, the receiving unit is further configured to receive a third reference signal from the third device.

In a possible implementation, the sending unit is further configured to send a third measurement result to the third device, where the third measurement result is a measurement result of the third reference signal, the third measurement result is a measurement result of the third reference signal, the third measurement result includes at least one of at least one second channel coefficient, at least one second delay power spectrum, at least one second PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, the receiving unit is further configured to receive first information from the third device, where the first information includes at least one of first accelerometer information, first magnetometer information, or a first angle error, the first accelerometer information indicates whether the third device has an accelerometer and/or indicates accelerometer accuracy of the third device, the first magnetometer information indicates whether the third device has a magnetometer and/or indicates magnetometer accuracy of the third device, and the first angle error indicates an angle error between a GCS estimated by the third device and an actual GCS.

In a possible implementation, the sending unit is further configured to send second information to a second device, the third device, or a fourth device, where the second information includes at least one of second accelerometer information, second magnetometer information, or a second angle error, the second accelerometer information indicates whether the first device has an accelerometer and/or indicates accelerometer accuracy of the first device, the second magnetometer information indicates whether the first device has a magnetometer and/or indicates magnetometer accuracy of the first device, and the second angle error indicates an angle error between a GCS estimated by the first device and the actual GCS.

According to a fifth aspect, an embodiment of this application further provides a communication (sensing or positioning) apparatus. The communication (sensing or positioning) apparatus includes at least one processor. When the at least one processor executes program code or instructions, the method according to any one of the first aspect or the possible implementations of the first aspect is implemented.

Optionally, the communication (sensing or positioning) apparatus may further include at least one memory, and the at least one memory is configured to store the program code or the instructions.

According to a sixth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method according to any one of the first aspect or the possible implementations of the first aspect.

Optionally, the chip may be an integrated circuit.

According to a seventh aspect, an embodiment of this application further provides a computer-readable storage medium, configured to store a computer program. The computer program is used to implement the method according to any one of the first aspect or the possible implementations of the first aspect.

According to an eighth aspect, an embodiment of this application further provides a computer program product including instructions. When the computer program product runs on a computer, the computer is caused to implement the method according to any one of the first aspect or the possible implementations of the first aspect.

### BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some embodiments of this application, and a person of ordinary skill in the art may still derive other accompanying drawings from these accompanying drawings without creative efforts.
FIG. 1 is a diagram of a communication system according to an embodiment of this application;
FIG. 2 is a schematic flowchart of a communication method according to an embodiment of this application;
FIG. 3 is a diagram of a target coordinate system according to an embodiment of this application;
FIG. 4 is a diagram of another target coordinate system according to an embodiment of this application;
FIG. 5 is a schematic flowchart of another communication method according to an embodiment of this application;
FIG. 6 is a schematic flowchart of still another communication method according to an embodiment of this application;
FIG. 7 is a diagram of a structure of a communication apparatus according to an embodiment of this application;
FIG. 8 is a diagram of a structure of another communication apparatus according to an embodiment of this application;
FIG. 9 is a diagram of a structure of a chip according to an embodiment of this application;
FIG. 10 is a diagram of a structure of an electronic device according to an embodiment of this application; and
FIG. 11 is a diagram of a structure of still another communication apparatus according to an embodiment of this application.

### DESCRIPTION OF EMBODIMENTS

The following clearly and completely describes technical solutions of embodiments of this application with reference to accompanying drawings in embodiments of this application. It is clear that the described embodiments are merely a part but not all of embodiments of this application. All other embodiments obtained by a person of ordinary skill in the art based on embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but are not intended to describe a particular order of the objects.

In addition, the terms "including", "having", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another step or unit inherent to the process, method, product, or device.

It should be noted that, in the descriptions of embodiments of this application, terms such as "example" or "for example" are used to represent giving an example, an illustration, or a description. Any embodiment or design solution described as "example" or "for example" in embodiments of this application should not be construed as being more preferential or advantageous than other embodiments or design solutions. Exactly, use of the term "example", "for example", or the like is intended to present a related concept in a specific manner.

Wireless sensing means that a sending device may radiate electromagnetic waves and send specific signals to ambient environment, and a receiving device may correspondingly receive electromagnetic waves and signals reflected by the environment. The receiving and sending devices may compare and analyze correlation between the received signals and the sent signals, and then derive related information of the ambient environment.

In wireless sensing, angle measurement and estimation about a target are important. A specific position of the target can be determined by measuring both an angle and a distance of the target on a single device side, or a specific position of the target can be determined can be determined by measuring an angle on a plurality of device sides.

Therefore, embodiments of this application provide a communication (sensing or positioning) method, to improve angle measurement accuracy.

The technical solutions provided in embodiments of this application may be applied to various communication, sensing, and positioning systems. The technical solutions provided in embodiments of this application may be applied to a 5th generation mobile communication technology (5th generation mobile communication technology, 5G) communication system, a future evolved system, a multi-communication converged system, or the like, or may be applied to an existing communication system or the like. Application scenarios of the technical solutions provided in embodiments of this application may include a plurality of scenarios, for example, machine to machine (machine to machine, M2M), macro-micro communication, enhanced mobile broadband (enhanced mobile broadband, eMBB), ultra-reliable and low-latency communication (ultra-reliable and low latency communication, uRLLC), and massive machine type communication (massive machine type communication, mMTC). These scenarios may include but are not limited to: a scenario of communication, sensing, and positioning between terminals, a scenario of communication, sensing, and positioning between network devices, a scenario of communication, sensing, and positioning between a network device and a terminal, and the like.

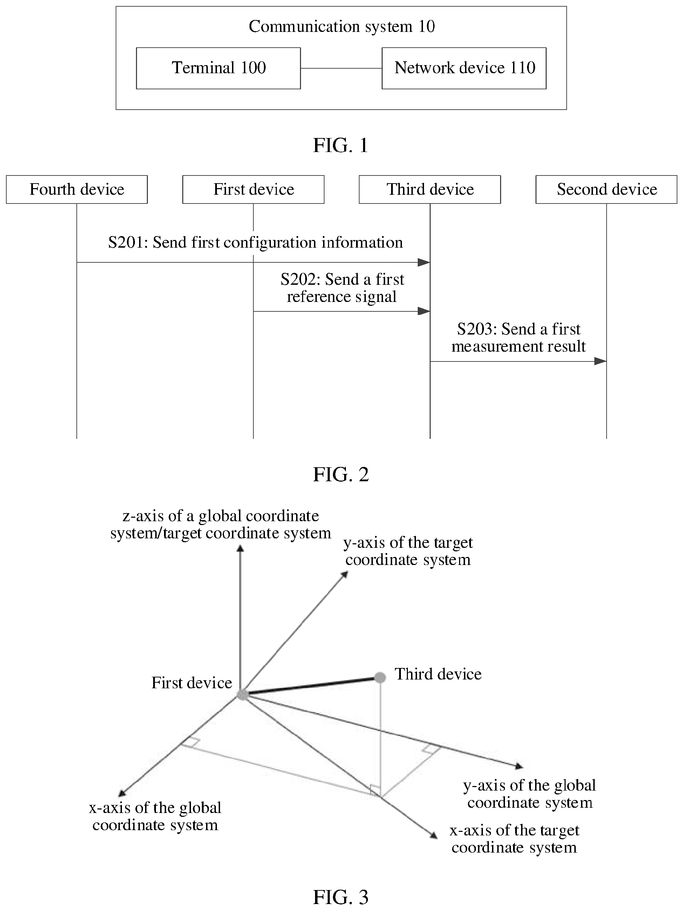

FIG. 1 shows a possible non-restrictive diagram of the foregoing communication (sensing or positioning) system. As shown in FIG. 1, the communication (sensing or positioning) system 10 includes at least two terminals 100 and/or at least one network device 110.

For example, the communication (sensing or positioning) system 10 may include a terminal 1 and a terminal 2.

For another example, the communication (sensing or positioning) system 10 may include a terminal 1, a terminal 2, and a network device 1.

For another example, the communication (sensing or positioning) system 10 may include a terminal 1, a terminal 2, a network device 1, and a network device 2.

The terminal 100 may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart home, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The network device 110 may be a base station (base station) in a radio access network (radio access network, RAN), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a mobile hotspot (Wi-Fi) system, or the like. The base station may be an architecture in which a central unit (central unit, CU) is separated from a distributed unit (distributed unit, DU). The RAN may be connected to a core network (which may be, for example, a long term evolution (long term evolution, LTE) core network, or a 5G core network). It may be understood that the base station is divided into the CU and the DU from a perspective of a logical function. The CU and the DU may be physically separated or deployed together. A plurality of DUs may share one CU. One DU may alternatively be connected to a plurality of CUs (not shown in the figure). The CU and the DU may be connected through an interface, for example, an F1 interface. The CU and the DU may be divided based on a protocol layer of a wireless network. For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like. It may be understood that division into processing functions of the CU and the DU based on the protocol layers is merely an example, and there may be other division. For example, the CU or the DU may be divided to have functions of more protocol layers. For example, the CU or the DU may alternatively be divided to have some processing functions of the protocol layers. In a design, some functions of the RLC layer and functions of protocol layers above the RLC layer are set on the CU, and remaining functions of the RLC layer and functions of protocol layers below the RLC layer are set on the DU. In another design, functions of the CU or the DU may alternatively be obtained through division based on a service type or another system requirement. For example, division is performed based on a delay, a function whose processing time needs to satisfy a delay requirement is set in the DU, and a function whose processing time does not need to satisfy the delay requirement is set in the CU. In another design, the CU may alternatively have one or more functions of the core network. One or more CUs may be set centrally or separately. For example, the CUs may be disposed on a network side for ease of centralized management. The DU may have a plurality of radio frequency functions, or the radio frequency functions may be disposed remotely.

The functions of the CU may be implemented by one entity or different entities. For example, the functions of the CU may be further divided. For example, a control plane (control plane, CP) and a user plane (user plane, UP) are separated, that is, a CU control plane (CU-CP) and a CU user plane (CU-UP). For example, the CU-CP and the CU-UP may be implemented by different functional entities, and are connected through an E1 interface. The CU-CP and the CU-UP may be coupled to the DU, to jointly perform functions of the base station. The CU control plane, that is, the CU-CP, may further include an architecture in which the CU-CP is further divided. To be specific, the existing CU-CP is further divided into a CU-CP 1 and a CU-CP 2. The CU-CP 1 includes various radio resource management functions, and the CU-CP 2 includes only an RRC function and a PDCP-C function (that is, a basic function of control plane signaling at the PDCP layer).

The network device 110 may alternatively be a sensing server.

It may be understood that, in this application, an example in which the network device and the terminal are used as execution bodies for illustrating interaction is used for illustration. However, the execution bodies for illustrating the interaction are not limited in this application. For example, the network device in the method in this application may alternatively be a chip, a chip system, or a processor used in the network device, or may be a logical node, a logical module, or software that can implement all or some functions of the network device. The terminal in the method in this application may alternatively be a chip, a chip system, or a processor used in the terminal, or may be a logical node, a logical module, or software that can implement all or a part of functions of the terminal.

FIG. 2 shows a communication (sensing or positioning) method according to an embodiment of this application. The communication method is applicable to a communication (sensing or positioning) system including a terminal 1 (that is, the following first device), a network device 1 (that is, the following second device), a network device 2 (that is, the following fourth device), and a terminal 2 (that is, the following third device). As shown in FIG. 2, the method includes the following steps.

S201: The fourth device sends first configuration information to the third device.

Correspondingly, the third device receives the first configuration information from the fourth device.

It may be understood that, in embodiments of this application, "sending information to... (for example, the terminal)" or a related illustration in the accompanying drawings may be understood as that a destination end of the information is the terminal, and may include directly or indirectly sending the information to the terminal. "Receiving information from... (for example, the terminal)", or "receiving information that is from... (for example, the terminal)", or a related illustration in the accompanying drawings may be understood as that a source end of the information is the terminal, and may include directly or indirectly receiving the information from the terminal. Information may undergo necessary processing, for example, a format change, between a source end for sending the information and a destination end. However, the destination end may understand valid information from the source end. A similar expression in embodiments of this application may be understood similarly, and details are not described herein again.

For example, the fourth device may directly send the first configuration information to the third device, or the fourth device may indirectly send the first configuration information to the terminal through another device.

The first configuration information includes first indication information, and the first indication information indicates the third device to receive a first reference signal from the first device and report a measurement result. The first measurement result is a measurement result of the first reference signal, the first measurement result includes information about a first AoA, the first AoA is an angle of a first path relative to a target coordinate system, the first path is a transmission path between the first device and the third device, a z-axis of the target coordinate system is the same as a z-axis of a global coordinate system GCS, a direction of an x-axis or a y-axis of the target coordinate system is the same as that of a projection of a first LoS path on an xy plane of the target coordinate system, and the first LoS path is a LoS path between the first device and the third device.

In a possible implementation, the first configuration information includes configuration information of the first LoS path, and the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

In a possible implementation, the first configuration information further includes direction information of the first LoS path, the direction information indicates that a direction of the first LoS path is a first direction or a second direction, the first direction is a direction of a LoS path from the first device to the third device, and the second direction is a direction of a LoS path from the third device to the first device.

In a possible implementation, the first indication information further indicates the third device to send the information about the first AoA based on the target coordinate system.

It may be understood that, because the z-axis of the target coordinate system is the same as the z-axis of the GCS, the xy plane of the target coordinate system is the same as an xy plane of the GCS. Therefore, the direction of the x-axis or the y-axis of the target coordinate system may be the same as that of a projection of a first LoS path on the xy plane of the GCS.

It may be understood that the first indication information may also indicate to report an included angle between the first path and the first LoS path and a ZAoA of the first path in the GCS. This may achieve a same effect as reporting the first AoA in the target coordinate system.

In a possible implementation, the direction of the x-axis of the target coordinate system is the same as the direction of the projection of the first LoS path on the xy plane of the target coordinate system. Alternatively, the direction of the x-axis of the target coordinate system is the same as a direction obtained by clockwise/counterclockwise rotating the direction of the projection of the first LoS path on the xy plane of the target coordinate system by a target angle, to be specific, clockwise/counterclockwise rotating the direction of the projection above the xy plane (that is, at a positive z-axis side) of the target coordinate system, or clockwise/counterclockwise rotating the direction of the projection below the xy plane (that is, at a negative z-axis side) of the target coordinate system. The direction of the y-axis of the target coordinate system is a direction obtained by clockwise/counterclockwise rotating the direction of the x-axis of the target coordinate system by 90 degrees, to be specific, clockwise/counterclockwise rotating the direction of the x-axis above the xy plane of the target coordinate system, or clockwise/counterclockwise rotating the direction of the x-axis below the xy plane of the target coordinate system.

In another possible implementation, the direction of the y-axis of the target coordinate system is the same as the direction of the projection of the first LoS path on the xy plane of the target coordinate system. Alternatively, the direction of the y-axis of the target coordinate system is the same as a direction obtained by clockwise/counterclockwise rotating the direction of the projection of the first LoS path on the xy plane of the target coordinate system by a target angle, to be specific, clockwise/counterclockwise rotating the direction of the projection above the xy plane of the target coordinate system, or clockwise/counterclockwise rotating the direction of the projection below the xy plane of the target coordinate system. The direction of the x-axis of the target coordinate system is a direction obtained by clockwise/counterclockwise rotating the direction of the y-axis of the target coordinate system by 90 degrees, to be specific, clockwise/counterclockwise rotating the direction of the y-axis above the xy plane of the target coordinate system, or clockwise/counterclockwise rotating the direction of the y-axis below the xy plane of the target coordinate system.

In a possible implementation, the target angle may be determined through configuration. For example, the first configuration information includes information about the target angle. Alternatively, the target angle may be preconfigured or predefined. For example, the target angle is predefined as 0 in a standard.

Refer to FIG. 3. In a possible implementation, the direction of the x-axis of the target coordinate system is the same as the direction of the projection of the first LoS path on the xy plane of the target coordinate system, and the direction of the y-axis of the target coordinate system is a direction obtained by counterclockwise rotating the first LoS path on the xy plane of the target coordinate system by 90 degrees above the xy plane (that is, at the positive z-axis side).

In a possible implementation, the information about the first AoA includes a first AAoA and/or a first ZAoA, the first AAoA is an angle of a projection of the first path on the xy plane of the target coordinate system relative to the x-axis of the target coordinate system, and the first ZAoA is an angle of the first path relative to the z-axis of the target coordinate system.

Optionally, the first configuration information may further include direction information of the first LoS path. Specifically, the direction information of the first LoS path indicates whether the first LoS path is a direction of a LoS path from the first device to the third device or a direction of a LoS path from the third device to the first device. It may be found that target coordinate systems determined in the two configurations have opposite positive x-axis directions.

Optionally, the first configuration information may further include configuration information of a first reference signal resource. The first reference signal resource is used to send and/or receive the first reference signal. Specifically, the first reference signal resource is used by the first device to send the first reference signal, and is used by the third device to receive the first reference signal. The third device may determine, based on the configuration information of the first reference signal resource, a time-frequency resource used to receive the first reference signal, and/or sequence information (which may also be understood as a code domain resource) corresponding to the first reference signal.

In a possible implementation, the target coordinate system may also be referred to as a common local coordinate system (common local coordinate system, CLCS), or may be considered as a special global coordinate system. In embodiments of this application, the coordinate system may also be understood as a reference system or a reference coordinate system, the global coordinate system may be understood as a global reference system or a global reference coordinate system, the local coordinate system may be understood as a local reference system or a local reference coordinate system, and the common local coordinate system may be understood as a common reference system or a common reference coordinate system.

In a possible implementation, the third device may be a terminal device or an access network device.

In a possible implementation, the fourth device may be a terminal device, an access network device, or a core network device. For example, the fourth device may be a device (generally a terminal device or an access network device) that subsequently sends the first reference signal, or may be another device.

S202: The first device sends the first reference signal to the third device.

Correspondingly, the third device receives the first reference signal from the first device.

In a possible implementation, the first reference signal may be a positioning reference signal (positioning reference signal, PRS), a sensing reference signal, a sounding reference signal (sounding reference signal, SRS), a channel state information reference signal, a synchronization reference signal, a synchronization reference signal/physical broadcast channel block, a demodulation reference signal, a tracking reference signal, or another reference signal.

Optionally, the first reference signal may be a reference signal between an access network device and a terminal device, or may be a reference signal between access network devices, or may be a reference signal between terminal devices, for example, a reference signal on a sidelink, or a device-to-device (Device-to-Device, D2D) or a proximity communication (proximity communication, PC5) link.

In a possible implementation, the first device may determine a resource used to send the first reference signal, that is, the first reference signal resource in step S201, and then send the configuration information of the first reference signal resource to the third device. Specifically, the first device may directly send the configuration information of the first reference signal resource to the third device. For example, the first device and the fourth device in S201 are a same device. The first device indicates the configuration information of the first reference signal resource to the third device based on the first configuration information. Alternatively, the first device may forward the configuration information of the first reference signal resource to the third device through another device. For example, the first device and the fourth device are different devices. After determining the first reference signal resource, the first device first sends the configuration information of the first reference signal resource to the fourth device. Then, as described in S201, the fourth device indicates the configuration information of the first reference signal resource to the third device based on the first configuration information.

In another possible implementation, the configuration information of the first reference signal resource is determined by the fourth device, and then the fourth device separately indicates the configuration information of the first reference signal resource to the first device and the third device. The first device sends the first reference signal based on the configuration information of the first reference signal resource, and the third device receives the first reference signal based on the configuration information of the first reference signal resource. In this implementation, embodiments of this application further include a step in which the fourth device sends the configuration information of the first reference signal resource to the first device.

S203: The third device sends the first measurement result to the second device.

Correspondingly, the second device receives the first measurement result from the third device.

The first measurement result is the measurement result of the first reference signal, the first measurement result includes the information about the first AoA, and the first AoA is an AoA in the target coordinate system.

For example, after receiving the first reference signal, the third device may determine, based on the measurement result of the first reference signal, that the first reference signal is transmitted from the first device to the third device via one or more paths. The third device may determine the first path from the one or more paths, and determine a direction of arrival of the first path, to determine an AoA of the first path relative to the target reference system, for example, an AAoA of the first path relative to the target reference information and a ZAoA of the first path relative to the target reference system; and then report the result to the second device.

Optionally, the second device may determine a plurality of first paths. For all the first paths, the second device may determine AoAs of the first paths relative to the target coordinate system, and then report the AoAs of the plurality of first paths relative to the target coordinate system.

Optionally, the third device may not report the first AoA, but reports the included angle between the first path and the first LoS path and the ZAoA of the first path in the GCS (or the equivalent ZAoA in the target coordinate system). This may achieve a same effect as reporting the first AoA in the target coordinate system.

In a possible implementation, the second device and the first device may be a same device, that is, a device that receives the first measurement result and a device that sends the first reference signal are a same device.

In a possible implementation, the second device and the fourth device may be a same device, that is, a device that receives the first measurement result and a device that configures the third device to report the AoA are a same device. In this case, the second device (that is, the fourth device) and the first device may be a same device or different devices.

Optionally, the third device may alternatively send a reference signal to the first device, and then the third device determines a second path based on a measurement result of the reference signal, and reports an AoA of the second path relative to the target reference system. For a related procedure, refer to steps S201 to S203. Details are not described herein.

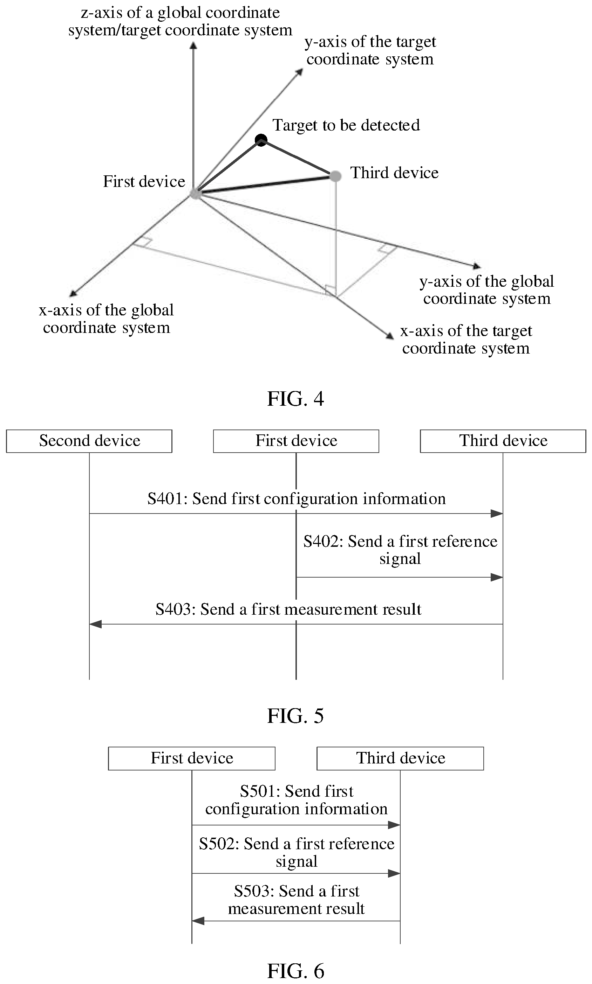

Refer to FIG. 3. As shown in FIG. 4, when there is a target to be detected, the first device may send a reference signal 1. The third device may receive a signal obtained after the reference signal 1 is reflected by the target, and determine an AoA at which the reflected signal arrives at the third device. The third device sends a reference signal 2. The first device may receive a signal obtained after the reference signal 2 is reflected by the target, and determine an AoA at which the reflected signal arrives at the first device. Both the two AoAs are AoAs in the target reference system. If relative positions of the first device and the third device can be determined, positions of the reflective target relative to the first device and the third device in the target reference system can be determined.

It can be learned from the foregoing solutions that a definition of the target coordinate system depends on determining of the first LoS path. The following describes four possible methods for determining the first LoS path by the third device.

Method 1: The third device determines the first LoS path after receiving the first reference signal. For example, after receiving the first reference signal, the third device may determine a plurality of paths, and each path has a corresponding propagation delay and AoA. The propagation delay may be an absolute propagation delay (that is, a delay from time at which the first device sends the first reference signal to time at which the third device ends the first reference signal through a specific path), or may be a relative propagation delay, for example, a delay relative to a start position or an end position of a receiving time unit of the third device. Generally, a LoS path is a path with a shortest delay between two devices. Therefore, the third device may determine, from the plurality of paths, that a path with earliest arrival time is the first LoS path. In this method, when reporting the measurement result, the third device may further report information about a related parameter of the first LoS path, for example, information such as a delay of the first LoS path. The information may be used by the second device or the first device to determine the first LoS path.

Method 2: The first device may send a second reference signal to the third device in advance, and the third device may determine the LoS path according to related descriptions similar to those in Method 1 based on a second measurement result. In this case, a direction of the first LoS path is a direction of a LoS path determined based on a measurement result of the second reference signal. In this method, the first configuration information may further include identifier information of the second reference signal. When a plurality of second reference signals are sent between the first device and the third device in advance, the identifier information indicates a measurement result of a specific reference signal based on which the third device determines the LoS path.

Method 3: The third device may receive the configuration information of the first LoS path, which is included, for example, in the first configuration information, and the third device determines the first LoS path based on the configuration information of the first LoS path. Specifically, the first device may send a second reference signal to the third device in advance. After receiving the second reference signal, the third device may send a second measurement result to the first device, the second device, or the fourth device. The second measurement result is a measurement result of the second reference signal. A device that receives the second measurement result determines the LoS path based on the second measurement result. When having stronger calculation and processing capabilities, the device may use some algorithms with better performance to assist the third device in determining a more accurate LoS path. After determining a related parameter of the LoS path, the device sends the configuration information of the first LoS path to the third device.

In a possible implementation, the second reference signal may be a PRS, a sensing reference signal, an SRS, a channel state information reference signal, a synchronization reference signal, a synchronization reference signal/physical broadcast channel block, a demodulation reference signal, a tracking reference signal, or another reference signal.

Optionally, the second reference signal may be a reference signal between an access network device and a terminal device, or may be a reference signal between access network devices, or may be a reference signal between terminal devices, for example, a reference signal on a sidelink, or a D2D or PC5 link.

In a possible implementation, the second measurement result includes at least one of at least one first channel coefficient, at least one first delay power spectrum, at least one first PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, the configuration information of the first LoS path includes at least one of AoA information associated with the first LoS path, delay information associated with the first LoS path, a precoding vector corresponding to the first LoS path, path index information associated with the first LoS path, identifier information of the first LoS path, or a timestamp associated with the first LoS path.

When the second measurement result includes the at least one first channel coefficient, the first channel coefficient may be a channel coefficient vector or a channel coefficient matrix on a plurality of frequency domain units and/or a plurality of time units and/or a plurality of antenna elements, and the device that receives the second measurement result may determine, based on the first channel coefficient, delays (which may be an absolute delay from sending the second reference signal by the first device to receiving the second reference signal by the third device, or may be a relative delay of receiving the second reference signal by the third device relative to a start or end position of a reference time unit, where the reference time unit is, for example, a time unit in which the second reference signal is located, and the time unit may be a symbol, a slot, a frame, or a subframe, and so on), AoAs (which may be, for example, an angle relative to a local coordinate system of an antenna panel of the third device), Doppler frequencies, amplitudes, phases, powers, or other information of different paths. The configuration information of the first LoS path may indicate at least one of the following information associated with the first LoS path: a delay, an AoA (which may be, for example, an angle relative to a local coordinate system of an antenna panel of the third device), a Doppler frequency, an amplitude, a phase, a power, or other information. For example, after the configuration information of the first LoS path indicates a delay, the third device may determine, based on the delay information, responses of different antennas in the delay when subsequently receiving the first reference signal, to determine a direction of a LoS path more accurately based on the first reference signal. For another example, after the configuration information of the first LoS path indicates an AoA, the third device determines the direction of the first LoS path based on an indication of the AoA.

When the second measurement result includes the at least one first delay power (which may alternatively be energy, amplitude, or coefficient) spectrum, the device that receives the second measurement result may determine delays of different paths based on the first delay power spectrum, and determine the delay of the first LoS path from the delays. In this case, the configuration information of the first LoS path may indicate the delay information associated with the first LoS path, and the third device may determine, based on the delay information, responses of different antennas in the delay when subsequently receiving the first reference signal, to determine a direction of a LoS path more accurately based on the first reference signal. Optionally, the delay power spectrum may be delay power spectrums on a plurality of antennas. The device that receives the second measurement result may perform operations such as combining, averaging, and filtering on the plurality of delay power spectrums.

When the second measurement result includes the at least one PMI (in this case, the second reference signal is generally a multi-antenna-port reference signal), the PMI may be a PMI for performing spatial domain compression, or may be a PMI for performing spatial and frequency domain compression, or may be a PMI of another type. The device that receives the second measurement result may determine, based on the at least one PMI, angles of departure of different paths on the first device side, and determine an angle of departure corresponding to the first LoS path from the angles of departure. The configuration information of the first LoS path may indicate a precoding vector (equivalent to an angle of departure). The third device may determine, based on the precoding vector information, responses of different antennas at the angle of departure when subsequently receiving the first reference signal (generally, the first reference signal needs to be a multi-antenna-port reference signal), to determine a direction of a LoS path more accurately based on the first reference signal. When the PMI includes the PMI for frequency domain compression, the device that receives the second measurement result may alternatively determine, based on the at least one PMI, delays associated with different paths. Therefore, delay information may alternatively be indicated in the configuration information of the first LoS path. Details are not described herein.

Optionally, the configuration information of the first LoS path may also indicate the foregoing plurality of pieces of information, and the third device may more accurately determine the first LoS path based on the plurality of pieces of information.

When the second measurement result includes the path information of the N paths, the N paths may be N paths determined by the third device. The AoA information of the path may include an AoA of the path, the AoA of the path may include an AAoA of the path and/or a ZAoA of the path, and the AoA of the path may be an AoA for which the local coordinate system (local coordinate system, LCS) is used as a reference or an AoA for which the GCS is used as a reference. The device that receives the second measurement result may determine, from the N paths, a specific path that is the LoS path, and then indicate, in the configuration information of the first LoS path, an index or an identifier of the LoS path in the N paths, or other information in the path information. The third device may determine, based on the configuration information of the first LoS path, a specific reported path that is the first LoS path.

In addition, in the foregoing descriptions, the first device may send a plurality of second reference signals to the third device, and the third device may also report a plurality of second measurement results. Different LoS paths may be determined based on different second reference signals and second measurement results. To ensure that all devices have consistent understanding of the LoS path, the first configuration information may further include an identifier and an index of the second reference signal, an identifier and an index of the second measurement result, or the timestamp associated with the first LoS path. The timestamp may correspond to time at which a specific second reference signal is sent/received or time at which a specific second measurement result is reported.

Method 4: The third device may further send a third reference signal to the first device, the first device reports a third measurement result to the third device, and the third device determines the first LoS path based on the third measurement result, and then sends the configuration information of the first LoS path to another device.

The third measurement result is a measurement result of the third reference signal, the third measurement result includes at least one of at least one second channel coefficient, at least one second delay power spectrum, at least one second PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, the third reference signal may be a PRS, a sensing reference signal, an SRS, a channel state information reference signal, a synchronization reference signal, a synchronization reference signal/physical broadcast channel block, a demodulation reference signal, a tracking reference signal, or another reference signal.

Optionally, the third reference signal may be a reference signal between an access network device and a terminal device, or may be a reference signal between access network devices, or may be a reference signal between terminal devices, for example, a reference signal on a sidelink, or a D2D or PC5 link.

The method may be understood as a paired method of the method 3. For specific details, refer to the specific descriptions in the method 3. Details are not described herein.

To cause another device to learn of angle measurement accuracy of the third device, the method may further include:

In a possible implementation, the third device may further send first information to the first device, the second device, or the fourth device.

The first information includes at least one of first accelerometer information, first magnetometer information, or a first angle error, the first accelerometer information indicates whether the third device has an accelerometer and/or indicates accelerometer accuracy of the third device, the first magnetometer information indicates whether the third device has a magnetometer and/or indicates magnetometer accuracy of the third device, and the first angle error indicates an angle error between a GCS estimated by the third device and an actual GCS.

To cause another device to learn of angle measurement accuracy of the first device, the method may further include:

In a possible implementation, the first device may further send second information to the second device, the third device, or the fourth device.

The second information includes at least one of second accelerometer information, second magnetometer information, or a second angle error, the second accelerometer information indicates whether the first device has an accelerometer and/or indicates accelerometer accuracy of the first device, the second magnetometer information indicates whether the first device has a magnetometer and/or indicates magnetometer accuracy of the first device, and the second angle error indicates an angle error between a GCS estimated by the first device and the actual GCS.

Based on the foregoing capability exchange information, the solutions of the present invention may be used when magnetometer accuracy is poor, accelerometer accuracy is high, and an azimuth angle error between an estimated GCS and an actual GCS is significant. Specific decision-making and determining may be performed by the first device, the second device, the third device, or the fourth device (for example, through indication using the first configuration information).

In related technologies, in an angle measurement process, a sending device and a receiving device need to construct an LCS, and then convert the LCS into the GCS. An additional angle measurement error is introduced in a process of converting the LCS into the GCS. However, according to the method provided in embodiments of this application, one common local coordinate system is determined by using a LoS path between two devices, to avoid an additional angle measurement error caused by coordinate system conversion, thereby improving angle measurement accuracy.

FIG. 5 shows another communication (sensing or positioning) method according to an embodiment of this application. The communication (sensing or positioning) method is applicable to a communication (sensing or positioning) system of a first device, a second device, and a third device. As shown in FIG. 5, the method includes the following steps.

S401: The second device sends first configuration information to the third device.

Correspondingly, the third device receives the first configuration information from the second device.

S402: The first device sends a first reference signal to the third device.

Correspondingly, the third device receives the first reference signal from the first device.

S403: The third device sends a first measurement result to the second device.

Correspondingly, the second device receives the first measurement result from the third device.

For specific implementations of S401 to S403, refer to S201 to S203. Details are not described herein.

FIG. 6 shows still another communication (sensing or positioning) method according to an embodiment of this application. The communication (sensing or positioning) method is applicable to a communication (sensing or positioning) system including a first device and a third device. As shown in FIG. 6, the method includes the following steps.

S501: The first device sends first configuration information to the third device.

Correspondingly, the third device receives the first configuration information from the first device.

S502: The first device sends a first reference signal to the third device.

Correspondingly, the third device receives the first reference signal from the first device.

S503: The third device sends a first measurement result to the first device.

Correspondingly, the first device receives the first measurement result from the third device.

For specific implementations of S501 to S503, refer to S201 to S203. Details are not described herein.

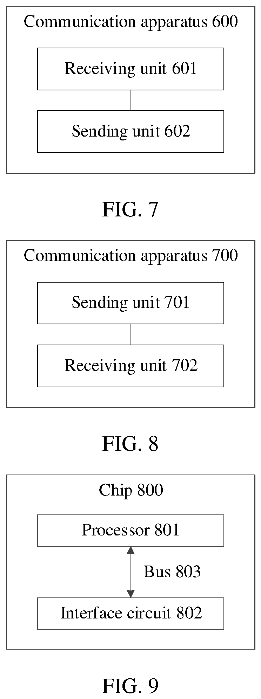

The following describes, with reference to FIG. 7 and FIG. 8, a communication (sensing or positioning) apparatus configured to perform the foregoing communication (sensing or positioning) method.

It may be understood that to implement the foregoing functions, the communication (sensing or positioning) apparatus includes a corresponding hardware module and/or a corresponding software module for performing the functions. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of embodiments of this application.

In embodiments of this application, the communication (sensing or positioning) apparatus may be divided into functional modules based on the foregoing method examples. For example, functional modules may be obtained through division based on corresponding functions, or two or more functions may be integrated into one processing module. The integrated module may be implemented in a form of hardware. It should be noted that module division in embodiments is an example and is merely logical function division. In practice, there may be another division manner.

When each functional module is obtained through division based on each corresponding function, FIG. 7 is a possible composition diagram of a communication (sensing or positioning) apparatus in the foregoing embodiments. The apparatus may be a terminal device or a network device, or may be a module (for example, a processor, a chip, or a chip system) used in the terminal device or the network device, or may be a logical node, a logical module, or software that can implement all or a part of functions of the terminal device or the network device. As shown in FIG. 7, the communication (sensing or positioning) apparatus 600 may include a receiving unit 601 and a sending unit 602.

The receiving unit 601 is configured to receive a first reference signal from a first device.

The sending unit 602 is configured to send a first measurement result to a second device, where the first measurement result is a measurement result of the first reference signal, the first measurement result is a measurement result of the first reference signal, the first measurement result includes information about a first AoA, the first AoA is an angle of a first path relative to a target coordinate system, the first path is a transmission path between the first device and a third device, a z-axis of the target coordinate system is the same as a z-axis of a GCS, a direction of an x-axis or a y-axis of the target coordinate system is the same as that of a projection of a first LoS path on an xy plane of the target coordinate system, the first LoS path is a LoS path between the first device and the third device, and the third device is a receive end of the first reference signal.

Optionally, the information about the first AoA includes a first AAoA and/or a first ZAoA, the first AAoA is an angle of a projection of the first path on the xy plane of the target coordinate system relative to the x-axis of the target coordinate system, and the first ZAoA is an angle of the first path relative to the z-axis of the target coordinate system.

In a possible implementation, the receiving unit 601 is further configured to receive first configuration information from a fourth device, where the first configuration information includes first indication information, and the first indication information indicates to send the information about the first AoA based on the target coordinate system.

In a possible implementation, the receiving unit 601 is further configured to receive first configuration information from a fourth device, where the first configuration information includes configuration information of the first LoS path, and the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

In a possible implementation, the first configuration information further includes direction information of the first LoS path, the direction information indicates that a direction of the first LoS path is a first direction or a second direction, the first direction is a direction of a LoS path from the first device to the third device, and the second direction is a direction of a LoS path from the third device to the first device.

In a possible implementation, the receiving unit 601 is further configured to receive a second reference signal from the first device.

In a possible implementation, the sending unit 602 is further configured to send a second measurement result to the first device, the second device, or the fourth device, where the second measurement result includes at least one of at least one first channel coefficient, at least one first delay power spectrum, at least one first PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, the sending unit 602 is further configured to send configuration information of the first LoS path to the first device, the second device, or the fourth device, where the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

In a possible implementation, the sending unit 602 is further configured to send a third reference signal to the first device.

In a possible implementation, the receiving unit 601 is further configured to receive a third measurement result from the first device, where the third measurement result is a measurement result of the third reference signal, the third measurement result is a measurement result of the third reference signal, the third measurement result includes at least one of at least one second channel coefficient, at least one second delay power spectrum, at least one second PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, the sending unit 602 is further configured to send first information to the first device, the second device, or the fourth device, where the first information includes at least one of first accelerometer information, first magnetometer information, or a first angle error, the first accelerometer information indicates whether the third device has an accelerometer and/or indicates accelerometer accuracy of the third device, the first magnetometer information indicates whether the third device has a magnetometer and/or indicates magnetometer accuracy of the third device, and the first angle error indicates an angle error between a GCS estimated by the third device and an actual GCS.

In a possible implementation, the receiving unit 601 is further configured to receive second information from the first device, where the second information includes at least one of second accelerometer information, second magnetometer information, or a second angle error, the second accelerometer information indicates whether the first device has an accelerometer and/or indicates accelerometer accuracy of the first device, the second magnetometer information indicates whether the first device has a magnetometer and/or indicates magnetometer accuracy of the first device, and the second angle error indicates an angle error between a GCS estimated by the first device and the actual GCS.

When each functional module is obtained through division based on each corresponding function, FIG. 8 is a possible composition diagram of a communication (sensing or positioning) apparatus in the foregoing embodiments. The apparatus may be a terminal device or a network device, or may be a module (for example, a processor, a chip, or a chip system) used in the terminal device or the network device, or may be a logical node, a logical module, or software that can implement all or a part of functions of the terminal device or the network device. As shown in FIG. 8, the communication (sensing or positioning) apparatus 700 may include a sending unit 701 and a receiving unit 702.

The sending unit 701 is configured to send first configuration information to a third device, where the first configuration information includes first indication information, and the first indication information indicates the third device to receive a first reference signal from a first device and report a measurement result.

The receiving unit 702 is configured to receive a first measurement result from the third device, where the first measurement result is a measurement result of the first reference signal, the first measurement result includes information about a first AoA, the first AoA is an angle of a first path relative to a target coordinate system, the first path is a transmission path between the first device and the third device, a z-axis of the target coordinate system is the same as a z-axis of a global coordinate system GCS, a direction of an x-axis or a y-axis of the target coordinate system is the same as that of a projection of a first LoS path on an xy plane of the target coordinate system, and the first LoS path is a LoS path between the first device and the third device.

Optionally, the information about the first AoA includes a first AAoA and/or a first ZAoA, the first AAoA is an angle of a projection of the first path on the xy plane of the target coordinate system relative to the x-axis of the target coordinate system, and the first ZAoA is an angle of the first path relative to the z-axis of the target coordinate system.

In a possible implementation, the first indication information further indicates the third device to send the information about the first AoA based on the target coordinate system.

In a possible implementation, the first configuration information includes configuration information of the first LoS path, and the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

In a possible implementation, the first configuration information further includes direction information of the first LoS path, the direction information indicates that a direction of the first LoS path is a first direction or a second direction, the first direction is a direction of a LoS path from the first device to the third device, and the second direction is a direction of a LoS path from the third device to the first device.

In a possible implementation, the sending unit 701 is further configured to send the first reference signal to the third device.

In a possible implementation, the sending unit 701 is further configured to send a second reference signal to the third device.

In a possible implementation, the receiving unit 702 is further configured to receive a second measurement result from the third device, where the second measurement result is a measurement result of the second reference signal, the second measurement result includes at least one of at least one first channel coefficient, at least one first delay power spectrum, at least one first PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, the receiving unit 702 is further configured to receive configuration information of the first LoS path sent by the third device, where the configuration information of the first LoS path includes at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

In a possible implementation, the receiving unit 702 is further configured to receive a third reference signal from the third device.

In a possible implementation, the sending unit 701 is further configured to send a third measurement result to the third device, where the third measurement result is a measurement result of the third reference signal, the third measurement result is a measurement result of the third reference signal, the third measurement result includes at least one of at least one second channel coefficient, at least one second delay power spectrum, at least one second PMI, or path information of N paths, the path information includes an index of the path, an index identifier of the path, delay information corresponding to the path, AoA information of the path, and LoS path information of the path, and the LoS path information indicates whether the path is a LoS path and/or indicates a probability that the path is a LoS path.

In a possible implementation, the receiving unit 702 is further configured to receive first information from the third device, where the first information includes at least one of first accelerometer information, first magnetometer information, or a first angle error, the first accelerometer information indicates whether the third device has an accelerometer and/or indicates accelerometer accuracy of the third device, the first magnetometer information indicates whether the third device has a magnetometer and/or indicates magnetometer accuracy of the third device, and the first angle error indicates an angle error between a GCS estimated by the third device and an actual GCS.

In a possible implementation, the sending unit 701 is further configured to send second information to a second device, the third device, or a fourth device, where the second information includes at least one of second accelerometer information, second magnetometer information, or a second angle error, the second accelerometer information indicates whether the first device has an accelerometer and/or indicates accelerometer accuracy of the first device, the second magnetometer information indicates whether the first device has a magnetometer and/or indicates magnetometer accuracy of the first device, and the second angle error indicates an angle error between a GCS estimated by the first device and the actual GCS.

An embodiment of this application further provides a chip. FIG. 9 is a diagram of a structure of a chip 800. The chip 800 includes one or more processors 801 and an interface circuit 802. Optionally, the chip 800 may further include a bus 803.

The processor 801 may be an integrated circuit chip and has a signal processing capability. In an implementation process, steps in the foregoing communication (sensing or positioning) method may be implemented by using a hardware integrated logical circuit in the processor 801, or by using instructions in a form of software.

Optionally, the processor 801 may be a general-purpose processor, a digital signal processor (digital signal processor, DSP), an integrated circuit (application-specific integrated circuit, ASIC), a field-programmable gate array (field-programmable gate array, FPGA) or another programmable logic device, a discrete gate or a transistor logic device, or a discrete hardware component. The processor 801 may implement or perform the methods and steps that are disclosed in embodiments of this application. The general-purpose processor may be a microprocessor, or the processor may be any conventional processor or the like.

The interface circuit 802 may be configured to send or receive data, instructions, or information. The processor 801 may use and process data, instructions, or other information received through the interface circuit 802, and send, through the interface circuit 802, processed information.

Optionally, the chip further includes a memory. The memory may include a read-only memory and a random access memory, and provide operation instructions and data for the processor. A part of the memory may further include a non-volatile random access memory (nonvolatile random access memory, NVRAM).

Optionally, the memory stores an executable software module or a data structure, and the processor may perform a corresponding operation by invoking the operation instructions stored in the memory (where the operation instructions may be stored in an operating system).

Optionally, the chip may be used in the communication (sensing or positioning) apparatus in embodiments of this application. Optionally, the interface circuit 802 may be configured to output an execution result of the processor 801. For the communication (sensing or positioning) methods provided in one or more embodiments of this application, refer to the foregoing embodiments. Details are not described herein again.

It should be noted that functions corresponding to each of the processor 801 and the interface circuit 802 may be implemented by using a hardware design, may be implemented by using a software design, or may be implemented by using a combination of software and hardware. This is not limited herein.

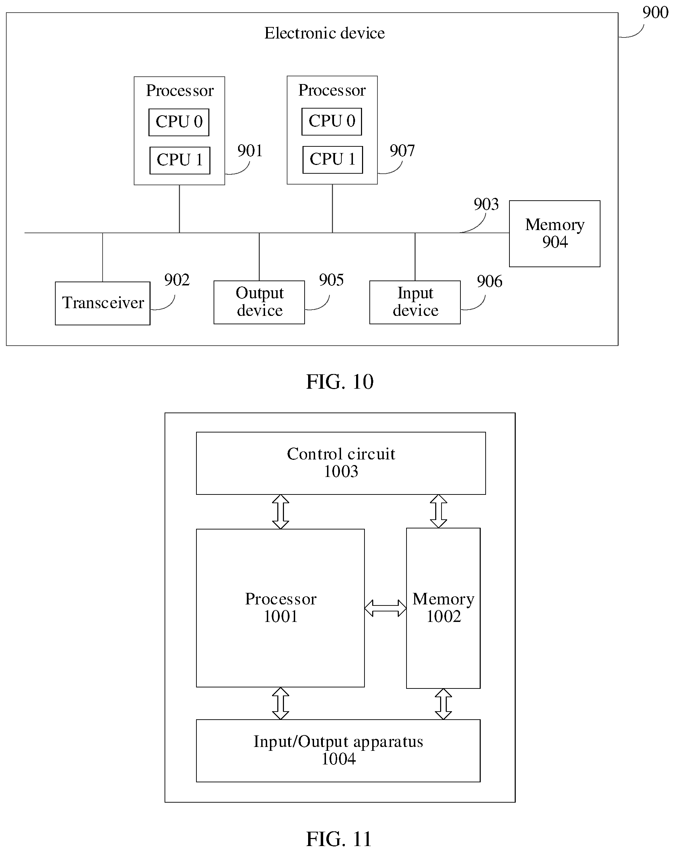

FIG. 10 is a diagram of a structure of an electronic device according to an embodiment of this application. The electronic device 900 may be a processor or a chip or functional module in the processor. As shown in FIG. 10, the electronic device 900 includes a processor 901, a transceiver 902, and a communication line 903.

The processor 901 is configured to perform any step in the communication (sensing or positioning) methods provided in embodiments of this application, and in a process of performing any step in the communication (sensing or positioning) method provided in embodiments of this application, the transceiver 902 and the communication line 903 may be selected and invoked to complete corresponding operations.

Further, the electronic device 900 may further include a memory 904. The processor 901, the memory 904, and the transceiver 902 may be connected through the communication line 903.

The processor 901 is a central processor, a general-purpose processor, a network processor (network processor, NP), a digital signal processor (digital signal processing, DSP), a microprocessor, a microcontroller, a programmable logic device (programmable logic device, PLD), or any combination thereof. Alternatively, the processor 901 may be another apparatus having a processing function, for example, a circuit, a device, or a software module. This is not limited.

The transceiver 902 is configured to communicate with another device or another communication network. The another communication network may be an Ethernet, a radio access network (radio access network, RAN), a wireless local area network (wireless local area network, WLAN), or the like. The transceiver 902 may be a module, a circuit, a transceiver, or any apparatus that can implement communication.

The transceiver 902 is mainly configured to receive and send commands, information, and the like, and may include a transmitter and a receiver that separately send and receive the commands, the information, and the like. An operation other than receiving and sending the commands, the information, and the like is implemented by the processor.

The communication line 903 is configured to perform information transmission between components included in the electronic device 900.

In a design, the processor may be considered as a logic circuit, and the transceiver may be considered as an interface circuit.

The memory 904 is configured to store instructions. The instruction may be a computer program.

The memory 904 may be a volatile memory or a non-volatile memory, or may include both volatile and non-volatile memories. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through illustrative but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 904 may alternatively be a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium, another magnetic storage device, or the like. It should be noted that the memories of the system and method described herein are intended to include, but are not limited to, these and any other suitable types of memories.

It should be noted that the memory 904 may exist independently of the processor 901, or may be integrated with the processor 901. The memory 904 may be configured to store instructions, program code, some data, or the like. The memory 904 may be located in the electronic device 900, or may be located outside the electronic device 900. This is not limited. The processor 901 is configured to execute the instructions stored in the memory 904, to implement the methods provided in the foregoing embodiments of this application.

In an example, the processor 901 may include one or more processors, for example, a processor 0 and a processor 1 in FIG. 10.

In an optional implementation, the electronic device 900 includes a plurality of processors. For example, in addition to the processor 901 in FIG. 10, the electronic device 900 may further include a processor 907.

In an optional implementation, the electronic device 900 further includes an output device 905 and an input device 906. For example, the input device 906 is a device like a keyboard, a mouse, a microphone, or a joystick, and the output device 905 is a device like a display or a speaker (speaker).

It should be noted that the electronic device 900 may be a chip system or a device having a structure similar to that in FIG. 10. The chip system may include a chip, or may include a chip and another discrete device. Actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited. In addition, a composition structure shown in FIG. 10 does not constitute a limitation on the electronic device 900. In addition to the components shown in FIG. 10, the electronic device 900 may include more or fewer components than those shown in FIG. 10, or some components may be combined, or different component arrangements may be used.

The processor and the transceiver described in this application may be implemented in an integrated circuit (integrated circuit, IC), an analog IC, a radio frequency integrated circuit, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an nMetal-oxide-semiconductor (nMetal-oxide-semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

FIG. 11 is a diagram of a structure of a communication (sensing or positioning) apparatus according to an embodiment of this application. The communication (sensing or positioning) apparatus is applicable to a scenario shown in the foregoing method embodiments. For ease of description, FIG. 11 shows only main components of the communication (sensing or positioning) apparatus, including a processor 1001, a memory 1002, a control circuit 1003, and an input/output apparatus 1004. The processor 1001 is mainly configured to process a communication protocol and communication data, execute a software program, and process data of the software program. The memory 1002 is mainly configured to store the software program and data. The control circuit 1003 is mainly configured to supply power and perform transmission on various electrical signals. The input/output apparatus 1004 is mainly configured to: receive data input by a user and output data to the user.

When the communication (sensing or positioning) apparatus is the processor 1001, the control circuit 1003 may be a mainboard. The memory 1002 includes a medium having a storage function, for example, a hard disk drive, a RAM, or a ROM. The processor 1001 may include a baseband processor 1001 and a central processing unit. The baseband processor is mainly configured to process the communication protocol and communication data. The central processing unit is mainly configured to: control the entire communication (sensing or positioning) apparatus, execute the software program, and process the data of the software program. The input/output apparatus 1004 includes a display, a keyboard, a mouse, and the like. The control circuit 1003 may further include or be connected to a transceiver circuit or a transceiver, for example, a network cable interface, and is configured to send or receive data or a signal, for example, perform data transmission and communication with another device. Further, the control circuit may further include an antenna, configured to receive and send a radio signal, and configured to perform data/signal transmission with another device.

An embodiment of this application further provides a communication (sensing or positioning) apparatus. The apparatus includes at least one processor. When the at least one processor executes program code or instructions, the foregoing related method steps are implemented to implement the communication (sensing or positioning) method in the foregoing embodiments.

Optionally, the apparatus may further include at least one memory, and the at least one memory is configured to store the program code or the instructions.

An embodiment of this application further provides a computer storage medium. The computer storage medium stores computer instructions. When the computer instructions are run on a communication (sensing or positioning) apparatus, the communication (sensing or positioning) apparatus performs the foregoing related method steps to implement the communication (sensing or positioning) methods in the foregoing embodiments.

An embodiment of this application further provides a computer program product. When the computer program product is run on a computer, the computer is caused to perform the foregoing related steps, to implement the communication (sensing or positioning) methods in the foregoing embodiments.

An embodiment of this application further provides a communication (sensing or positioning) apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute instructions, so that the chip performs the communication (sensing or positioning) methods in the foregoing method embodiments.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, units and algorithm steps with reference to the examples described in embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes several instructions for indicating a computer device (which may be a personal computer, a server, a network device, or the like) to perform all or a part of the steps of the methods described in embodiments of this application. The storage medium includes: any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first reference signal from a first device; and
sending a first measurement result to a second device, wherein the first measurement result is a measurement result of the first reference signal, the first measurement result comprises information about a first angle of arrival AoA, the first AoA is an angle of a first path relative to a target coordinate system, the first path is a transmission path between the first device and a third device, a z-axis of the target coordinate system is the same as a z-axis of a global coordinate system GCS, a direction of an x-axis or a y-axis of the target coordinate system is the same as that of a projection of a first line of sight LoS path on an xy plane of the target coordinate system, the first LoS path is a LoS path between the first device and the third device, and the third device is a receive end of the first reference signal.

2. The method according to claim 1, wherein the information about the first AoA comprises a first azimuth angle of arrival AAoA and/or a first zenith angle of arrival ZAoA, the first AAoA is an angle of a projection of the first path on the xy plane of the target coordinate system relative to the x-axis of the target coordinate system, and the first ZAoA is an angle of the first path relative to the z-axis of the target coordinate system.

3. The method according to claim 1 or 2, wherein the method further comprises:
receiving first configuration information from a fourth device, wherein the first configuration information comprises first indication information, and the first indication information indicates to send the information about the first AoA based on the target coordinate system.

4. The method according to claim 1 or 2, wherein the method further comprises:
receiving first configuration information from a fourth device, wherein the first configuration information comprises configuration information of the first LoS path, and the configuration information of the first LoS path comprises at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

5. The method according to claim 3 or 4, wherein the first configuration information further comprises direction information of the first LoS path, the direction information indicates that a direction of the first LoS path is a first direction or a second direction, the first direction is a direction of a LoS path from the first device to the third device, and the second direction is a direction of a LoS path from the third device to the first device.

6. The method according to any one of claims 1 to 5, wherein the method further comprises:
receiving a second reference signal from the first device; and
sending a second measurement result to the first device, the second device, or the fourth device, wherein the second measurement result is a measurement result of the second reference signal, the second measurement result comprises at least one of at least one first channel coefficient, at least one first delay power spectrum, at least one first precoding matrix indicator PMI, or path information of N paths, the path information comprises an index of the path, an index identifier of the path, delay information corresponding to the path, AoA information of the path, and LoS path information of the path, and the LoS path information indicates whether the path is a LoS path and/or indicates a probability that the path is a LoS path.

7. The method according to any one of claims 1 to 3, wherein the method further comprises:
sending configuration information of the first LoS path to the first device, the second device, or the fourth device, wherein the configuration information of the first LoS path comprises at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

8. The method according to claim 7, wherein the method further comprises:
sending a third reference signal to the first device; and
receiving a third measurement result from the first device, wherein the third measurement result is a measurement result of the third reference signal, the third measurement result comprises at least one of at least one second channel coefficient, at least one second delay power spectrum, at least one second PMI, or path information of N paths, the path information comprises an index of the path, an index identifier of the path, delay information corresponding to the path, AoA information of the path, and LoS path information of the path, and the LoS path information indicates whether the path is a LoS path and/or indicates a probability that the path is a LoS path.

9. The method according to any one of claims 1 to 8, wherein the method further comprises:
sending first information to the first device, the second device, or the fourth device, wherein the first information comprises at least one of first accelerometer information, first magnetometer information, or a first angle error, the first accelerometer information indicates whether the third device has an accelerometer and/or indicates accelerometer accuracy of the third device, the first magnetometer information indicates whether the third device has a magnetometer and/or indicates magnetometer accuracy of the third device, and the first angle error indicates an angle error between a GCS estimated by the third device and an actual GCS.

10. The method according to any one of claims 1 to 9, wherein the method further comprises:
receiving second information from the first device, wherein the second information comprises at least one of second accelerometer information, second magnetometer information, or a second angle error, the second accelerometer information indicates whether the first device has an accelerometer and/or indicates accelerometer accuracy of the first device, the second magnetometer information indicates whether the first device has a magnetometer and/or indicates magnetometer accuracy of the first device, and the second angle error indicates an angle error between a GCS estimated by the first device and the actual GCS.

11. A communication method, comprising:
sending first configuration information to a third device, wherein the first configuration information comprises first indication information, and the first indication information indicates the third device to receive a first reference signal from a first device and report a measurement result; and
receiving a first measurement result from the third device, wherein the first measurement result is a measurement result of the first reference signal, the first measurement result comprises information about a first AoA, the first AoA is an angle of a first path relative to a target coordinate system, the first path is a transmission path between the first device and the third device, a z-axis of the target coordinate system is the same as a z-axis of a global coordinate system GCS, a direction of an x-axis or a y-axis of the target coordinate system is the same as that of a projection of a first LoS path on an xy plane of the target coordinate system, and the first LoS path is a LoS path between the first device and the third device.

12. The method according to claim 11, wherein the information about the first AoA comprises a first AAoA and/or a first ZAoA, the first AAoA is an angle of a projection of the first path on the xy plane of the target coordinate system relative to the x-axis of the target coordinate system, and the first ZAoA is an angle of the first path relative to the z-axis of the target coordinate system.

13. The method according to claim 11, wherein the first indication information further indicates the third device to send the information about the first AoA based on the target coordinate system.

14. The method according to claim 11 or 12, wherein the first configuration information comprises configuration information of the first LoS path, and the configuration information of the first LoS path comprises at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

15. The method according to any one of claims 11 to 14, wherein the first configuration information further comprises direction information of the first LoS path, the direction information indicates that a direction of the first LoS path is a first direction or a second direction, the first direction is a direction of a LoS path from the first device to the third device, and the second direction is a direction of a LoS path from the third device to the first device.

16. The method according to any one of claims 11 to 15, wherein the method further comprises:
sending the first reference signal to the third device.

17. The method according to any one of claims 11 to 16, wherein the method further comprises:
sending a second reference signal to the third device; and
receiving a second measurement result from the third device, wherein the second measurement result is a measurement result of the second reference signal, the second measurement result comprises at least one of at least one first channel coefficient, at least one first delay power spectrum, at least one first PMI, or path information of N paths, the path information comprises an index of the path, an index identifier of the path, delay information corresponding to the path, AoA information of the path, and LoS path information of the path, and the LoS path information indicates whether the path is a LoS path and/or indicates a probability that the path is a LoS path.

18. The method according to any one of claims 11 to 13, wherein the method further comprises:
receiving configuration information of the first LoS path sent by the third device, wherein the configuration information of the first LoS path comprises at least one of a timestamp associated with the first LoS path, delay information associated with the first LoS path, path index information associated with the first LoS path, identifier information of the first LoS path, AoA information associated with the first LoS path, or a precoding vector corresponding to the first LoS path.

19. The method according to claim 18, wherein the method further comprises:
receiving a third reference signal from the third device; and
sending a third measurement result to the third device, wherein the third measurement result is a measurement result of the third reference signal, the third measurement result is a measurement result of the third reference signal, the third measurement result comprises at least one of at least one second channel coefficient, at least one second delay power spectrum, at least one second PMI, or path information of N paths, the path information comprises an index of the path, an index identifier of the path, delay information corresponding to the path, AoA information of the path, and LoS path information of the path, and the LoS path information indicates whether the path is a LoS path and/or indicates a probability that the path is a LoS path.

20. The method according to any one of claims 11 to 19, wherein the method further comprises:
receiving first information from the third device, wherein the first information comprises at least one of first accelerometer information, first magnetometer information, or a first angle error, the first accelerometer information indicates whether the third device has an accelerometer and/or indicates accelerometer accuracy of the third device, the first magnetometer information indicates whether the third device has a magnetometer and/or indicates magnetometer accuracy of the third device, and the first angle error indicates an angle error between a GCS estimated by the third device and an actual GCS.

21. The method according to any one of claims 11 to 20, wherein the method further comprises:
sending second information to a second device, the third device, or a fourth device, wherein the second information comprises at least one of second accelerometer information, second magnetometer information, or a second angle error, the second accelerometer information indicates whether the first device has an accelerometer and/or indicates accelerometer accuracy of the first device, the second magnetometer information indicates whether the first device has a magnetometer and/or indicates magnetometer accuracy of the first device, and the second angle error indicates an angle error between a GCS estimated by the first device and the actual GCS.

22. An apparatus, comprising at least one processor and a memory, wherein the apparatus is a communication apparatus, a sensing apparatus, or a positioning apparatus, and the at least one processor executes a program or instructions stored in the memory, to cause the apparatus to implement the method according to any one of claims 1 to 21.

23. A computer-readable storage medium, configured to store a computer program, wherein when the computer program is run on a computer or a processor, the computer or the processor is caused to implement the method according to any one of claims 1 to 21.

24. A computer program product, wherein the computer program product comprises instructions, and when the instructions are run on a computer or a processor, the computer or the processor is caused to implement the method according to any one of claims 1 to 21.

25. A chip, comprising at least one processor and a memory, wherein the at least one processor executes a program or instructions stored in the memory, to implement the method according to any one of claims 1 to 21.
